# EUROPÄISCHE PATENTANMELDUNG

(11) **EP 0 560 105 A2**
(43) Veröffentlichungstag der Anmeldung: **15.09.1993**
(21) Anmeldenummer: 93102746.0
(22) Anmeldetag: 22.02.1993
(51) Int. Cl.: G06K 7/10

(54) **Optischer Lesekopf**

(30) Priorität: 11.03.1992 DE 4207774
(71) Anmelder: Schablonentechnik Kufstein Aktiengesellschaft, A-6330 Kufstein (AT)
(72) Erfinder: Juffinger, Josef, A-6335 Thiersee (AT); Als, Andreas, A-6300 Wörgl (AT)
(74) Vertreter: TER MEER - MÜLLER - STEINMEISTER & PARTNER

(57) **Zusammenfassung**

Ein optischer Lesekopf enthält eine Abbildungsoptik (2) zur Bündelung von einfallendem Licht sowie eine konzentrisch zur Abbildungsoptik (2) angeordnete Lichtempfangsoptik (37, 38) zum Empfang des von der Abbildungsoptik (2) gebündelten und von einem Gegenstand (44) zurückgeworfenen Lichts. Die Abbildungsoptik (2) und die Lichtempfangsoptik (37, 38) liegen dabei auf derselben optischen Achse (5), wobei die Lichtempfangsoptik (37, 38) die Abbildungsoptik (2) umgibt. Die Lichtempfangsoptik (37, 38) ist ferner in Richtung des einfallenden Lichts gegenüber der Abbildungsoptik (2) nach vorn verschoben, wobei eine Eingangsfläche (37) der Lichtempfangsoptik (37, 38) auf die optische Achse (5) zu geneigt ist. Der optische Lesekopf eignet sich u. a. zur farbselektiven Abtastung von Stoffbahnen und anderen Farbmustern und weist neben einem hohen Auflösungvermögen ein hohes Lichtaufnahmevermögen auf.

## Beschreibung

Die Erfindung betrifft einen optischen Lesekopf gemäß dem Oberbegriff des Patentanspruchs 1.

Aus der DE 34 23 131 A1 ist bereits eine Anordnung zum Lesen von Strichcodes bekannt, bei der über einen Einzellichtleiter zugeführtes Licht mit Hilfe einer Kugellinse auf ein Objekt gerichtet wird. Das vom Objekt reflektierte Licht wird durch die Kugellinse auf einen anderen Einzellichtleiter fokussiert und von diesem zurückgeleitet, wobei dieser andere Einzellichtleiter entlang der optischen Achse der Leseanordnung verläuft.

Ferner ist aus der DE 33 29 375 A1 ein optischer Fühler bekannt, bei dem ein erster optischer Wellenfühler Licht empfängt und das Licht zu einer Zielzone leitet, während ein zweiter optischer Wellenfühler ein an der Zielzone reflektiertes Bild empfängt, um dieses weiter zu übertragen.

Der Erfindung liegt die Aufgabe zugrunde, einen optischen Lesekopf zu schaffen, der in der Lage ist, möglichst viel von dem vom Objekt zurückgeworfenen Licht zu erfassen.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Ein optischer Lesekopf nach der Erfindung zeichnet sich dadurch aus, daß
- die Lichtempfangsoptik die Abbildungsoptik umgibt,
- die Lichtempfangsoptik in Richtung des einfallenden Lichts über die Abbildungsoptik hinaussteht, und
- eine Eingangsfläche der Lichtempfangsoptik auf die optische Achse zu geneigt ist.

Erfindungsgemäß ist die auf der optischen Achse liegende Abbildungsoptik von der Lichtempfangsoptik konzentrisch umgeben, so daß vom Gegenstand zurückgeworfenes Licht (z. B. reflektiertes oder gestreutes Licht) über einen sehr großen Raumwinkel erfaßt werden kann. Der optische Lesekopf ist daher in der Lage, einen hohen Lichtstrom zu einem optischen Detektor zu leiten, der ausgangsseitig mit ihm verbunden ist. Während des Betriebs des optischen Lesekopfs weist dieser im allgemeinen einen konstanten Abstand zum abzutastenden Gegenstand auf, so daß sich das von ihm zurückgeworfene Licht über einen noch größeren Raumwinkel erfassen läßt, wenn die Lichtempfangsoptik in Richtung des einfallenden Lichts über die Abbildungsoptik hinaussteht. In einem solchen Fall liegt also die Lichtempfangsoptik näher am Gegenstand als die Abbildungsoptik. Ist darüber hinaus die Eingangsfläche der Lichtempfangsoptik auf die optische Achse zu geneigt, so erhöht sich dadurch der Raumwinkel abermals, unter dem vom Gegenstand zurückgeworfenes Licht erfaßt werden kann, so daß durch die genannten Maßnahmen ein optischer Lesekopf mit hohem Lichtempfangsvermögen erhalten wird.

Der Abbildungsoptik wird das einfallende Licht vorzugsweise über eine Lichtleitfaser zugeführt, die eingangsseitig mit einer Lichtquelle verbunden ist, beispielsweise mit einer Xenon-Hochdrucklampe. Der ausgangsseitig mit dem Lesekopf verbundene optische Detektor kann farbselektive Eigenschaften aufweisen, so daß es möglich ist, auch einen mit einem Farbmuster versehenen Gegenstand farbgetreu abzutasten.

Ein derartiger Gegenstand kann beispielsweise eine Gewebebahn sein, etwa eine textile Stoffbahn. Bei der optischen Abtastung einer derartigen Stoffbahn ist darauf zu achten, daß das auf sie auftreffende Licht nicht vollständig in solchen Bereichen absorbiert wird, die jeweils zwischen zwei Webfäden der Stoffbahn zu liegen kommen. Der Abtastlichtfleck darf also nicht zu klein sein. Andererseits kommt es darauf an, bei besonders fein gewebten Stoffen ein hohes Auflösungsvermögen bei der optischen Abtastung zu erzielen, so daß der optische Lesekopf in der Lage sein muß, das ihm zugeführte Abtastlicht sauber zu fokussieren. Zu diesem Zweck weist die Abbildungsoptik vorzugsweise Achromate auf, um die genannte Aufgabe zu erfüllen. Bei der optischen Abtastung wird die Stoffbahn dann an einer solchen Stelle zwischen Abbildungsoptik und Brennpunkt positioniert, an der die Größe des Abtastlichtflecks wenigstens annähernd der Maschengröße der Stoffbahn entspricht. Übliche Maschengrößen liegen im Bereich von 65 µm bis 2 mm, so daß entsprechende Durchmesser für den Abtastlichtfleck durch Positionierung von Stoffbahn und Lesekopf relativ zueinander einstellbar sein müssen.

Der abzutastende Gegenstand kann insbesondere aber auch eine Papiervorlage mit glatter Oberfläche sein, die ein von z. B. einem Designer entworfenes Muster trägt, das in den Computer übernommen werden soll. Bei der Abtastung eines derartigen Musters werden besonders kleine Abtastlichtflecke benötigt, die ebenfalls im Bereich von 65 µm Durchmesser oder darunter liegen.

Nach einer sehr vorteilhaften Ausgestaltung der Erfindung schneiden im Zentrum der Eingangsfläche der Lichtempfangsoptik stehende Flächennormalen die optische Achse in einem Punkt, der vor dem gegenstandsseitigen Brennpunkt der Abbildungsoptik liegt. Der genannte Schnittpunkt kann in einem Abstand vom Brennpunkt liegen, der etwa 15 bis 25 Prozent der gegenstandsseitigen Brennweite der Abbildungsoptik beträgt. Hierdurch wird erreicht, daß auch bei der optischen Abtastung von Gegenständen mit unterschiedlich großen Strukturen, z. B. von Stoffbahnen mit unterschiedlicher Maschengröße, wenn also die Gegenstände bzw. Stoffbahnen unterschiedlich weit von der Abbildungsoptik entfernt sind, immer ein größtmöglicher Lichtfluß in der Lichtempfangsoptik erhalten wird, obwohl sie nicht unmittelbar auf den Jeweiligen Abtastlichtfleck ausgerichtet ist.

Nach einer vorteilhaften Ausgestaltung der Erfindung besteht die Lichtempfangsoptik aus einer Vielzahl von Lichtleitfasern, die mit ihren Endflächen um die Abbildungsoptik herum angeordnet sind. Die Endflächen der Lichtleitfasern können dabei unmittelbar benachbart zueinander liegen, um möglichst viel Licht zu erfassen, das vom Gegenstand zurückgeworfen wird.

Einerseits ist es möglich, die Enden der Lichtleitfasern schräg anzuschleifen, um die dabei erhaltenen Eingangsflächen auf die optische Achse zuzuneigen, wenn die Lichtleitfasern parallel zur Letzteren verlaufen. Es ist aber auch möglich, die Lichtleitfasern an ihren die Eingangsflächen aufweisenden Enden unter einem spitzen Winkel auf die optische Achse zulaufen zu lassen, so daß dann die Eingangsflächen senkrecht zur Längsrichtung der Lichtleitfasern liegen können, was sich herstellungstechnisch leichter realisieren läßt.

Es ist vorteilhaft, die Lichtempfangsoptik mit Hilfe von Lichtleitfasern aufzubauen, da hierdurch ein größtmöglicher Gestaltungsspielraum bei der Konzipierung des optischen Lesekopfs erhalten wird. Lichtleitfasern sind darüber hinaus am Markt verfügbar, was den Aufbau der Lichtempfangsoptik verbilligt.

Nach einer anderen sehr vorteilhaften Ausgestaltung der Erfindung sind die die Eingangsflächen aufweisenden Enden der Lichtleitfasern so weit über den Rand der Abbildungsoptik nach innen geführt, daß sie unmittelbar benachbart zum Kegel des fokussierten Lichts zu liegen kommen.

Durch eine derartige Anordnung der Enden der Lichtleitfasern wird insbesondere dann ein hoher Lichtstrom in der Lichtempfangsoptik erhalten, wenn das auf den abzutastenden Gegenstand auftreffende Licht im wesentlichen in Richtung der Abbildungsoptik zurückgeworfen wird.

Vorteilhaft enthält der optische Lesekopf nach der Erfindung einen hohlzylinderischen Trägerkörper, der an seiner vorderen Stirnseite eine innen liegende Kegelfläche aufweist, von der in Normalenrichtung dieser Kegelfläche verlaufende Durchgangsbohrungen zur Aufnahme der Lichtleitfasern ausgehen.

Dieser Trägerkörper dient einerseits zur leichten Positionierung der Lichtleitfasern im Bereich der Eingangsfläche des optischen Lesekopfs und andererseits zur Positionierung der Abbildungsoptik, so daß die Lichtempfangsoptik und die Abbildungsoptik Aufnahme in nur einem einzigen Bauteil finden, was die Herstellungskosten des optischen Lesekopfs verringert und seine Montage vereinfacht.

Die genannten Durchgangsbohrungen im Trägerkörper münden an ihrem der Kegelfläche abgewandten Ende in einer außenseitigen Umfangsausnehmung des Trägerkörpers, so daß die Lichtleitfasern in dieser Umfangsausnehmung um den Trägerkörper herum- und zu einer axialen hinteren Ausgangsöffnung geführt werden können. Die Umfangsausnehmung bildet mit anderen Worten einen Aufnahmeraum für die Lichtleitfasern, um diese gegenüber äußeren Einflüssen zu schützen. Diese Umfangsausnehmung wird mit Hilfe einer Außenhülse abgedeckt, die den Trägerkörper aufnimmt. Der Außenhülse kommt aber nicht nur die Schutzfunktion im Hinblick auf die Lichtleitfasern zu, sondern sie dient auch dazu, mit einem hinteren Umfangsflansch einen hohlzylinderischen Druckstempel ins Innere des Trägerkörpers zu schieben, wenn sie mit Hilfe eines Überwurfelements zum vorderen Ende des optischen Lesekopfs gezogen wird, das sich am Trägerkörper abstützt. Durch den hohlzylinderischen Druckstempel wird die Abbildungsoptik innerhalb des Trägerkörpers arretiert.

Trägerkörper, Außenhülse, Druckstempel und Überwurfelement bilden somit eine kompakte Baueinheit, so daß ein sehr robuster optischer Lesekopf erhalten wird.

Die Erfindung wird nachfolgend unter Bezugnahme auf die Zeichnung näher beschrieben. Es zeigen:
- **Fig. 1**: einen Axialschnitt durch einen optischen Lesekopfnach einem ersten Ausführungsbeispiel,
- **Fig. 2**: eine Ansicht des optischen Lesekopfs nach Fig. 1 von unten,
- **Fig. 3**: eine Ansicht des optischen Lesekopfs nach Fig. 1 von oben,
- **Fig. 4**: ein optisches Abtastsystem mit dem in Fig. 1 gezeigten optischen Lesekopf, und
- **Fig. 5**: einen optischen Lesekopf nach einem zweiten Ausführungsbeispiel der Erfindung.

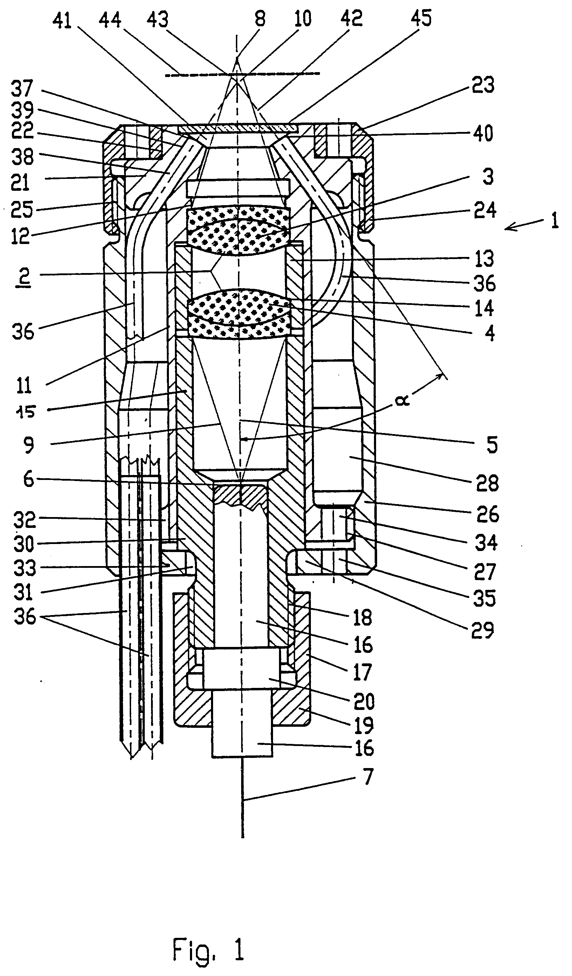

Ein erstes Ausführungsbeispiel eines optischen Lesekopfs nach der Erfindung wird nachfolgend unter Bezugnahme auf die Fig. 1 bis 3 näher beschrieben.

Die Fig. 1 zeigt einen optischen Lesekopf 1, der in seinem Innern eine Abbildungsoptik 2 aufweist, die aus zwei Achromaten 3 und 4 besteht, die auf einer optischen Achse 5 angeordnet sind. Die Abbildungsoptik 2 dient dazu, aus einer Stirnfläche 6 einer Lichtleitfaser 7 austretendes Licht in einem vor dem optischen Lesekopf 1 und auf der optischen Achse 5 liegenden Brennpunkt 8 zu fokussieren. Hierzu wird ein von der Stirnfläche 6 der Lichtleitfaser 7 abgestrahlter Lichtkegel 9 vom Achromaten 4 in ein Parallellichtbündel zwischen den Achromaten 4 und 3 und anschließend vom Achromaten 3 in einen Projektionslichtkegel 10 umgewandelt.

Die Abbildungsoptik 2 befindet sich innerhalb eines hohlzylinderischen Trägerkörpers 11, der an seinem vorderen Ende eine innere Umfangsstufe 12 aufweist, auf die der Achromat 3 zu liegen kommt. In den hohlzylinderischen Trägerkörper 11 sind weiterhin eine Distanzhülse 13 mit einer inneren Umfangsstufe 14 an ihrem dem Achromaten 3 abgewandten Ende zur Aufnahme des Achromaten 4 sowie ein hohlzylinderischer Druckstempel 15 eingesetzt. Wird der hohlzylinderische Druckstempel 15 ins Innere des Trägerkörpers 11 geschoben, so drückt er gegen den Umfangsrand des Achromaten 4 und schiebt somit die Distanzhülse 13 gegen den Umfangsrand des Achromaten 3, so daß eine Verpressung der Abbildungsoptik 2 im Innern des Trägerkörpers 11 erzielt wird. Dabei stimmen die optische Achse 5, die Zylinderachse des Trägerkörpers 11 und die Zylinderachse des Druckstempels 15 überein.

Eine zylinderische Lichtleitfaserfassung 16 ist in das der Abbildungsoptik 2 abgewandte Ende des hohlzylinderischen Druckstempels 15 passend eingesetzt, wobei der Druckstempel 15 im benachbarten Wandbereich 17 ein Außengewinde 18 trägt, auf das eine Überwurfmutter 19 aufschraubbar ist. Die Lichtleitfaserfassung 16, entlang deren Zylinderachse die Lichtleitfaser 7 fest eingebettet ist, weist einen äußeren Umfangsflansch 20 auf, über den die Überwurfmutter 19 greift, um diesen Umfangsflansch 20 gegen das hintere Ende des Druckstempels 15 zu ziehen und damit die Lichtleitfaserfassung 16 im Druckstempel 15 zu arretieren. Der Abstand zwischen der Stirnfläche der zylinderischen Lichtleitfaserfassung 16, an der die Stirnfläche des Lichtleiters 7 zu liegen kommt, und der druckstempelseitigen Anschlagfläche des Umfangsflanschs 20 ist dabei so gewählt, daß die Stirnfläche 6 des Lichtleiters 7 im Brennpunkt des Achromaten 4 zu liegen kommt.

Im Bereich des Achromaten 3 weist der Trägerkörper 11 einen äußeren Umfangsflansch 21 auf, in dessen Stirnfläche eine randseitige Umfangsstufe 22 eingebracht ist. Die randseitige Umfangsstufe 22 dient zur Aufnahme einer Überwurfmutter 23, die sich am Umfangsflansch 21 abstützt. Die Überwurfmutter 23 weist eine sich zum hinteren Ende des optischen Lesekopfs 1 erstreckende Umfangswand 24 mit Innengewinde 25 auf, das auf ein entsprechendes Außengewinde einer Außenhülse 26 aufschraubbar ist, die einerseits auf dem Umfangswandbereich des äußeren Umfangsflanschs 21 und andererseits auf dem Umfangswandbereich eines weiteren äußeren Umfangsflanschs 27 aufliegt, der sich am hinteren Ende des Trägerkörpers 11 befindet und z. B. einstückig mit diesem verbunden ist. Auf diese Weise wird ein um den Trägerkörper 11 herumlaufender Hohlraum 28 erhalten, der in Axialrichtung durch die Umfangsflansche 21 und 27 und nach außen durch die Außenhülse 26 begrenzt wird.

Die Außenhülse 26 weist an ihrem hinteren Ende einen nach innen weisenden Umfangsflansch 29 auf, der hinter eine Stufe 30 am äußeren Umfang des hohlzylinderischen Druckstempels 15 greift. Die Stufe 30 wird dadurch erhalten, daß der Außendurchmesser des Druckstempels 15 in diesem Bereich verringert wird, so daß er mit seinem das Gewinde 18 tragenden Abschnitt durch eine Zentralöffnung 31 hindurchgesteckt werden kann, die durch den Umfangsflansch 29 gebildet wird.

Wird die Überwurfmutter 23 gedreht, so stützt sie sich einerseits am Umfangsflansch 21 ab und zieht andererseits die Außenhülse 26 zu sich heran, da sie mit diesem über das Gewinde 25 in Eingriff steht. Infolge dieser Axialbewegung der Außenhülse 26 zieht der mit ihr einstückig verbundene Umfangsflansch 29 den Druckstempel 15 nach innen, da der Umfangsflansch 29 dann hinter die Stufe 30 greift. Die sich daraus ergebende Axialverschiebung des Druckstempels 15 führt Jetzt zu der bereits erwähnten Verpressung der Abbildungsoptik 2.

Sowohl im Umfangsflansch 27 als auch im Umfangsflansch 29 können axiale Durchgangsbohrungen 32, 33, 34 und 35 vorhanden sein, die miteinander fluchten. Durch diese Durchgangsbohrungen lassen sich Lichtleitfasern 36 der Lichtempfangsoptik einerseits und Befestigungselemente zum Befestigen des optischen Lesekopfs 1 an einem nicht dargestellten Träger andererseits hindurchführen.

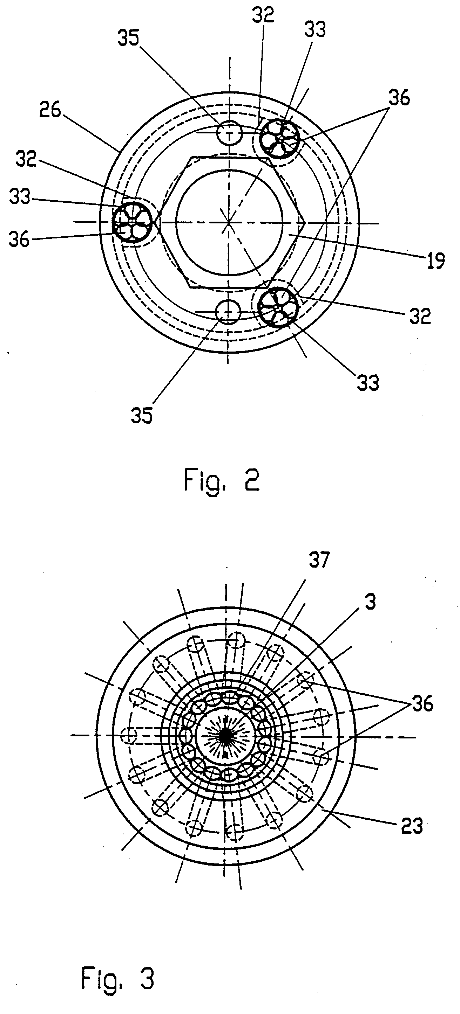

Die Fig. 2 zeigt eine Bodenansicht des optischen Lesekopfs nach Fig. 1, wobei insgesamt drei in gleichem Winkelabstand verteilte Durchgangsbohrungen für Lichtleitfasern 36 und zwei Durchgangsbohrungen für Befestigungselemente vorhanden sind. Die Durchgangsbohrungen 32 im Umfangsflansch 27 können auch als radiale Ausnehmungen ausgebildet sein, wie die Fig. 2 zeigt.

Im nachfolgenden wird die Lichtempfangsoptik des optischen Lesekopfs 1 näher beschrieben.

Entsprechend den Fig. 1 und 3 sind fünfzehn Lichtleitfasern 36 durch die Öffnungen 32 und 33 hindurch ins Innere des Hohlraums 28 geführt, wobei die Lichteingangsflächen 37 der Lichtleitfasern 36, also ihre stirnseitigen Endflächen, konzentrisch um die Abbildungsoptik 2 herum angeordnet sind, wie die Fig. 3 erkennen läßt. Die Lichteingangsflächen 37 der Lichtleitfasern 36 liegen dabei eng benachbart aneinander, so daß zwischen ihnen keine Zwischenräume vorhanden sind.

Die Enden 38 der Lichtleitfasern 36 sind durch Durchgangsbohrungen 39 hindurchgeführt, die sich im oberen Umfangsflansch 21 des Trägerkörpers 11 befinden. Die Enden 38 sind dabei fest in die Durchgangsbohrungen 39 eingesetzt, die unter gleichen Winkelabständen in Umfangsrichtung des optischen Lesekopfs 1 verlaufen. Die Durchgangsbohrungen 39 münden einerseits in der Kegelfläche 40 eines Kegels 41 am spitzenseitigen inneren Umfangswandbereich des Trägerkörpers 11 und andererseits in Hohlraum 28. Dabei ist das Material des Trägerkörpers 11 bis nahe zum Projektionslichtkegel 10 geführt, um die Durchgangsbohrungen 39 möglichst nah benachbart zum Projektionslichtkegel 10 vorsehen zu können. Ein Winkel α zwischen der optischen Achse 5 und den jeweiligen Zentralachsen 42 der Durchgangsbohrungen 39 ist so gewählt, daß sich die Zentralachsen 42 in einem gemeinsamen Punkt 43 auf der optischen Achse 5 schneiden, der zwischen dem Brennpunkt 8 und dem Achromaten 3 und vorzugsweise in der Nähe des Brennpunkts 8 liegt. Besonders günstig ist es, wenn der Abstand zwischen dem Schnittpunkt 43 und dem Brennpunkt 8 etwa 15 bis 25 Prozent der gegenstandsseitigen Brennweite der Abbildungsoptik 2 beträgt. Vorzugsweise weisen die Zentralachsen 42 einen Winkel α von 30 bis 45 Grad relativ zur optischen Achse 5 auf, wobei die Endflächen 37 etwa um den halben Abstand zwischen dem Achromat 3 und dem abzutastenden Gegenstand über den Achromaten 3 hervorstehen.

Mit dem Bezugszeichen 44 ist in Fig. 1 ein abzutastender Gegenstand bezeichnet, beispielsweise eine Textilstoffbahn, deren Farbmuster erfaßt und in einem Computer gespeichert werden soll. Der abzutastende Gegenstand 44 und der optische Lesekopf 1 können in Richtung der optischen Achse 5 so relativ zueinander verschoben werden, daß sich der Gegenstand 44 mit einem Abtastlichtfleck einer gewünschten Größe scannen läßt. Der Abtastlichtfleck ergibt sich aus der Schnittfläche des Gegenstands 44 mit dem Projektionslichtkegel 10.

Es sei noch darauf hingewiesen, daß die Abbildungsoptik 2 und die Lichteingangsflächen 37 der Lichtleitfasern 36 durch eine Planglasscheibe 45 abgedeckt sein können, um Schutz vorVerschmutzung und Beschädigung zu gewährleisten.

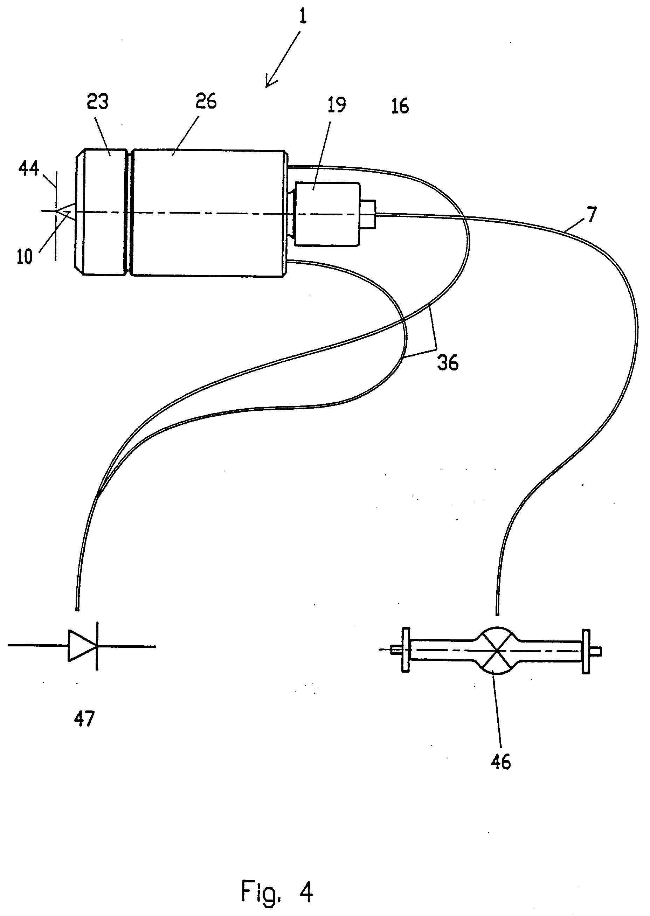

Die Fig. 4 zeigt ein optisches Abtastsystem mit einem optischen Lesekopf nach Fig. 1. Gleiche Teile wie in Fig. 1 sind dabei mit den gleichen Bezugszeichen versehen und werden nicht nochmals beschrieben.

Wie zu erkennen ist, gelangt Licht aus einer Lichtquelle 46 in die Lichtleitfaser 7, um mit diesem Licht den abzutastenden Gegenstand 44 beleuchten zu können. Die Lichtquelle 46 kann beispielsweise eine Xenon-Hochdrucklampe oder eine andere geeignete Lampe sein.

Das über die Lichtleitfasern 36 vom optischen Lesekopf 1 ausgegebene Licht gelangt auf eine Fotodetektoranordnung 47, die farbselektive Eigenschaften hat, um auf diese Weise unterschiedliche Signale für unterschiedliche Farbanteile des empfangenden Lichts erzeugen zu können.

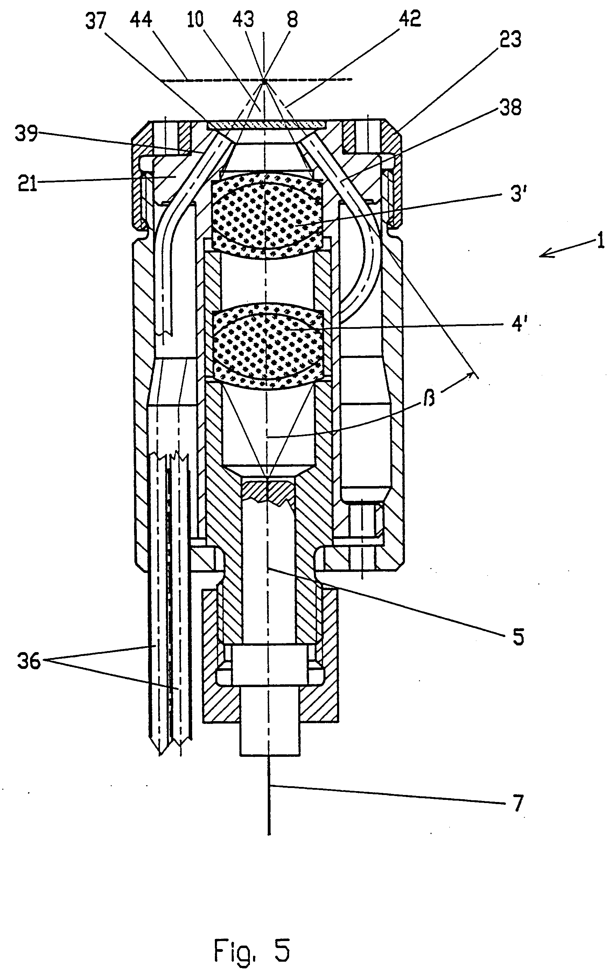

Ein anderes Ausführungsbeispiel eines optischen Lesekopfs 1 nach der Erfindung zeigt die Fig. 5. Auch hier sind gleiche Teile wie in Fig. 1 mit den gleichen Bezugszeichen versehen und werden nicht nochmals beschrieben.

Der optische Lesekopf nach Fig. 5 unterscheidet sich von demjenigen nach Fig. 1 nur dadurch, daß in ihm Steinheiler Achromate 3', 4' zur Erzeugung einer kurzbrennweitigen Abbildung verwendet werden. Der Winkel β zwischen der optischen Achse 5 und den Zentralachsen 42 der Bohrungen 39 ist ferner so gewählt, daß der Schnittpunkt 43 der Zentralachsen 42 im Brennpunkt 8 zu liegen kommt. Mit einem derartigen Lesekopf ist eine besonders genaue Abtastung selbst feinster Gewebemuster bei gleichzeitig hohem Lichtaufnahmevermögen des Lesekopfs möglich.

## Patentansprüche

1. Optischer Lesekopf, mit einer eine optische Achse (5) aufweisenden Abbildungsoptik (2) zur Bündelung einfallenden Lichts, sowie mit einer konzentrisch zur optischen Achse (5) angeordneten Lichtempfangsoptik (37, 38) zum Empfang des von der Abbildungsoptik (2) gebündelten und von einem Gegenstand (44) zurückgeworfenen Lichts, **dadurch gekennzeichnet,** daß
- die Lichtempfangsoptik (37, 38) die Abbildungsoptik (2) umgibt,
- die Lichtempfangsoptik (37, 38) in Richtung des einfallenden Lichts über die Abbildungsoptik (2) hinaussteht, und
- eine Eingangsfläche (37) der Lichtempfangsoptik (37,38) auf die optische Achse (5) zu geneigt ist.

2. Optischer Lesekopf nach Anspruch 1, **dadurch gekennzeichnet,** daß der Abbildungsoptik (2) das einfallende Licht über eine Lichtleitfaser (7) zugeführt wird.

3. Optischer Lesekopf nach Anspruch 1 oder 2, **dadurch gekennzeichnet,** daß die Abbildungsoptik Achromate (3, 4; 3', 4') enthält.

4. Optischer Lesekopf nach einem der Ansprüche 1 bis 3, **dadurch gekennzeichnet,** daß im Zentrum der Eingangsfläche (37) der Lichtempfangsoptik (37, 38) stehende Flächennormalen die optische Achse (5) in einem Punkt (43) schneiden, der vor dem gegenstandsseitigen Brennpunkt (8) der Abbildungsoptik (2) liegt.

5. Optischer Lesekopf nach Anspruch 4, **dadurch gekennzeichnet,** daß der Abstand zwischen dem Schnittpunkt (43) und dem Brennpunkt (8) etwa 15 bis 25 Prozent der gegenstandsseitigen Brennweite der Abbildungsoptik (2) beträgt.

6. Optischer Lesekopf nach einem der Ansprüche 1 bis 5, **dadurch gekennzeichnet,** daß die Lichtempfangsoptik (37, 38) aus einer Vielzahl von Lichtleitfasern (36) besteht.

7. Optischer Lesekopf nach Anspruch 6, **dadurch gekennzeichnet,** daß die Lichtleitfasern (36) an ihren die Eingangsflächen (37) aufweisenden Enden unter einem spitzen Winkel (α; β) auf die optische Achse (5) zulaufen.

8. Optischer Lesekopf nach Anspruch 7, **dadurch gekennzeichnet,** daß die die Eingangsflächen (37) aufweisenden Enden (38) der Lichtleitfasern (36) soweit über den Rand der Abbildungsoptik (2) nach innen geführt sind, daß sie unmittelbar benachbart zum Kegel (10) des fokussierten Lichts zu liegen kommen.

9. Optischer Lesekopf nach einem der Ansprüche 5 bis 8, **gekennzeichnet durch** einen hohlzylinderischen Trägerkörper (11), der an einer vorderen Stirnseite eine innen liegende Kegelfläche (40) aufweist, von der in Normalenrichtung dieser Kegelfläche (40) verlaufende Durchgangsbohrungen (39) zur Aufnahme der Lichtleitfasern (38) ausgehen.

10. Optischer Lesekopf nach Anspruch 9, **dadurch gekennzeichnet,** daß die Durchgangsbohrungen (39) an ihrem der Kegelfläche (40) abgewandten Ende in einer außenseitigen Umfangsausnehmung (28) des Trägerkörpers (11) münden.

11. Optischer Lesekopf nach Anspruch 10, **dadurch gekennzeichnet,** daß an einer hinteren Stirnseite des Trägerkörpers (11) ein äußerer Umfangsflansch (27) mit Axialöffnungen (32) zur Durchführung der Lichtleitfasern (36) vorhanden ist.

12. Optischer Lesekopf nach einem der Ansprüche 8 bis 11, **dadurch gekennzeichnet,** daß eine den Trägerkörper (11) aufnehmende Außenhülse (26) an ihrer vorderen Stirnseite mittels eines Überwurfelements (23) anziehbar ist, das sich am Trägerkörper (11) abstützt, und an ihrer hinteren Stirnseite einen nach innen weisenden Umfangsflansch (29) aufweist, über den ein hohlzylinderischer Druckstempel (15) ins Innere des Trägerkörpers (11) schiebbar ist.

13. Optischer Lesekopf nach Anspruch 12, **dadurch gekennzeichnet,** daß der nach innen weisende Umfangsflansch (29) Axialbohrungen (33) zur Durchführung der Lichtleitfasern (36) aufweist.
